# FASCICULE DE BREVET EUROPEEN

(11) **EP 0 749 374 B1**
(45) Date de publication et mention de la délivrance du brevet: **03.11.1999**
(21) Numéro de dépôt: 95914410.6
(22) Date de dépôt: 24.03.1995
(51) Int. Cl.: B60C 27/12

(54) **DISPOSITIF DE MONTAGE RAPIDE DE CHAINES A NEIGE POUR PNEUMATIQUES DE VEHICULES**
ANORDNUNG ZUM SCHNELLBEFESTIGEN VON SCHNEEKETTEN AN FAHRZEUGREIFEN
DEVICE FOR QUICKLY FITTING SNOW CHAINS TO VEHICLE TYRES

(30) Priorité: 24.03.1994 FR 9403726
(43) Date de publication de la demande: 27.12.1996
(73) Titulaire: Thioliere, Marie-Louise, 69210 L'Arbresle (FR); Thioliere, Antoine Marcel, 69005 Lyon (FR); Thioliere, Jeanne Marguerite, 69004 Lyon (FR); Thioliere, Paul Francis, 69210 L'Arbresle (FR)
(72) Inventeur: Thioliere, Georges, (FR)
(74) Mandataire: Schmitt, John
(86) Numéro de dépôt international: FR9500364
(87) Numéro de publication internationale: WO9525643

(56) Documents cités:
- EP-A- 0 226 571
- EP-A- 0 298 906
- CH-A- 556 251
- US-A- 2 655 972
- US-A- 3 242 963
- US-A- 3 896 687
- US-A- 3 965 956

## Description

L'invention concerne l'amélioration du dispositif de mise en place de chaînes à neige sur les roues des véhicules routiers.

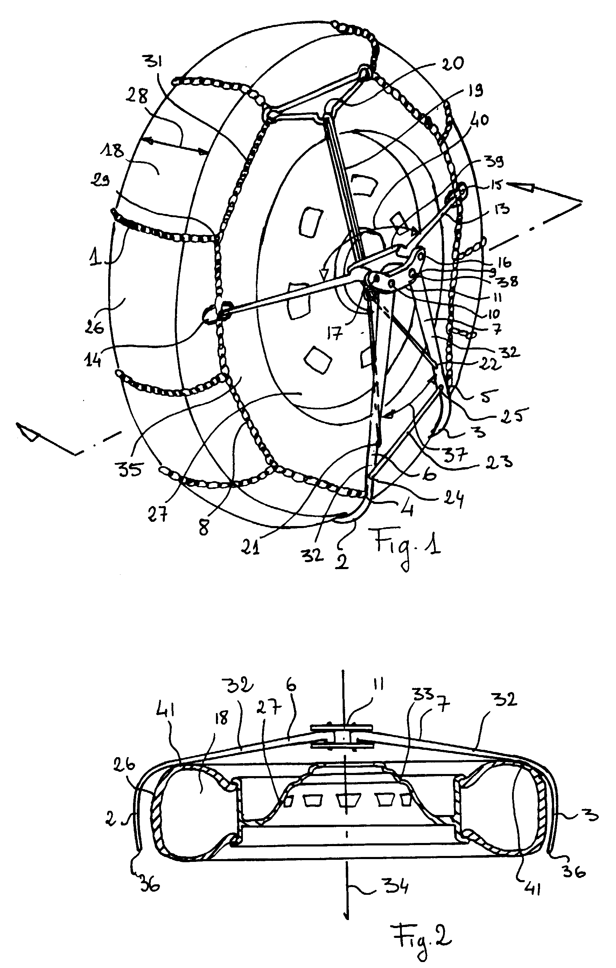

Lorsque la route est couverte de neige, les pneus des véhicules risquent de patiner, ce qui provoque la perte de contrôle de la direction du véhicule par le conducteur. Pour éviter ou limiter les risques de patinage, on a agi sur les pneus en les dotant de clous au en les datent d'une bande de roulement comportant une taille très particulière et ou une gomme de conception très particulière; cette technique est efficace mais nécessite un jeu de pneus spéciaux pour l'hiver car ces pneus ne peuvent pas être utilisés en été et de plus ils manquent d'efficacité sur de la neige fraîche en couche épaisse. Pour les utilisateurs occasionnels et pour ceux qui risquent de trouver de la neige épaisse, le marché propose des dispositifs composés de chaînes ou de barres crantées qui s'intercalent entre le pneu et la neige; ces dispositifs comportent des aspérités, d'une part, qui s'ancrent dans la neige et, d'autre part, sur lesquelles s'accroche le pneu. Lorsqu'il s'agit de chaînes, celles-ci, qu'on appellera ci-après "traverses" (1) Fig.1, sont placées sensiblement perpendiculairement à la bande de roulement (26) du pneu (18) de manière à se trouver, chacune, dans un plan passant par l'axe de rotation de la roue (Z7), et placées si possible à intervalles réguliers; la longueur de chaque traverse (1) est qénéralement supérieure à la largeur (28) de la bande de roulement (26), et chacune de ses extrémités (29) est reliée de part et d'autre du pneu (18) à l'extrémité (29) des autres traverses (1) par une chaîne de liaison (8) appelée ci-après "chaîne de tour"; il y a une chaîne de tour extérieure (31) et une chaîne de tour intérieure qui est placée de l'autre côté (30) Fig.2 de la roue (27), c'est à dire du côté de la fixation du moyeu de la roue (27); lorsque l'ensemble est posé sur le sol de manière à ce que les traverses (1) Fig.1 et les chaînes de tour (8) soient droites, on obtient une sorte d'échelle dont les chaînes de tour (8) forment les montants et les traverses (1), qui sont généralement de longueur égale forment les barreaux; on enroule cet ensemble autour du pneu (18) de la roue (27) de manière à ce que les traverses (1) soient positionnées sur la bande de roulement (26), le milieu de la traverse (1) coincidant sensiblement avec la médiane de la bande de roulement (26); on tend les chaînes de tour (8), dont la longueur maximum est inférieure, par example, de l'ordre de quinze à vingt pour cent au périmètre extérieur du pneu (18); an place de proche en proche les traverses (1) de manière à ce qu'elles se situent sensiblement dans des plans passant par l'axe de la roue (27), et on rattache les deux extrémités (4) et (5) de chaque chaîne de tour (8) par un dispositif approprié en l'ajustant à une longueur convenable pour qu'elle soit tendue. La demande de brevet d'invention n° FR 2.630.972 décrit une chaîne à neige de ce type. En pratique, il est difficile d'accéder à la partie arrière (30) Fig.2 de la roue (27), située du coté du point d'attache du moyeux, pour rattacher la chaîne de tour ; si on place l'ensemble de manière à venir coiffer d'abord la partie supérieure de la roue, la zone de fixation des extrémités (4) et (5) des chaînes de tour (8) se retrouve au voisinage du sol, et à cet endroit la longueur de contact de la bande de roulement (26) avec le sol étant par construction supérieure à la distance entre deux traverses (1) successives et il est impossible de rattacher correctement les extrémités (4) et (5) des la chaîne de tour (8); il est recommandé, à ce moment là, de placer la chaîne à neige à plat comme précédemment décrit de faire rouler la voiture dessus et ensuite de procéder à la fermeture des chaînes de tour (8); cela demande d'effectuer de nombreuses opérations dans un ordre déterminé et demeure une opération qui demande un entraînement préalable pour être effectuée correctement. Pour simplifier la mise en place du dispositif antidérapant sur les pneus, les traverses ont été remplacées dans d'autres applications par des barreaux crantés placés perpendiculairement à la bande de roulement et reliés à des tiges qui sont sensiblement perpendiculaires aux barreaux et orientées sensiblement vers le centre de la roue; les tiges sont reliées entre elles, au voisinage du centre de la roue par une pièce comprenant une mécanique permettant d'ajuster la longueur des tiges de manière à ce que l'ensemble des barreaux vienne se serrer sur le pneu; à ce moment là, il n'est plus nécessaire d'accéder à l'arrière de la roue pour mettre en place le dispositif; cette solution, qui apporte une solution technique élégante au problème, présente l'inconvénient d'être mécaniquement plus complexe donc plus chère et elle a dû être abandonnée car elle détériorait la suspension et la transmission des véhicules. Il existe un système dérivé, suivant le dispositif de la demande de brevet EP O 312 636 qui permet la fixation de chaînes comprenant des barreaux crantés qui sont fixés à deux chaînes de tour elles-mêmes fixées en quatre points situés sur la bande de roulement du pneu; les chaînes de tour s'intercalent en même temps que les barreaux entre la bande de roulement et le sol. Les quatre points de fixation sont reliés par un dispositif articulé à des bras formant sensiblement une croix centrée sur l'axe de la roue; la pièce de liaison maintenant les bras est rattachée à la jante de la roue par des fixations élastiques par rapport auxquelles, la pièce de liaison peut tourner autour d'un axe parallèle à l'axe de la roue pour permettre aux points de fixation des chaînes de tour de tourner par rapport à la fixation élastique. Ce dispositif présente l'inconvénient d'être délicat à poser sur la roue. Le brevet US-A-3 242 963 décrit une chaîne à neige comportant des traverses maintenues en place sur la bande de roulement par des chaînes de tour tendues à l'aide de jambettes associées à un bras, la mise en tension étant assurée par un vérin pneumatique tendant à rapprocher lesdites jambettes.

La présente invention a pour but de proposer un dispositif antidérapant qui présente l'avantage d'être simple, facile à monter sur le pneu, sans avoir notamment à déplacer la voiture; il permet notamment le centrage et la tension de l'ensemble en un seul et même mouvement. Ce but est atteint par le dispositif selon la revendication 1, dont le préambule est basé sur l'état de la technique selon US-A-3 242 963 .
La fig. 1 représente une vue perspective du dispositif de tension des chaînes suivant l'invention vu du côté extérieur de la roue en position opérationnelle.
La fig. 2 représente une coupe suivant un plan passant par l'axe de rotation de la roue et montrant le dispositif de tension dans la position qu'il prend en cours de montage sur la roue, tandis que les chaînes ne sont pas représentées.

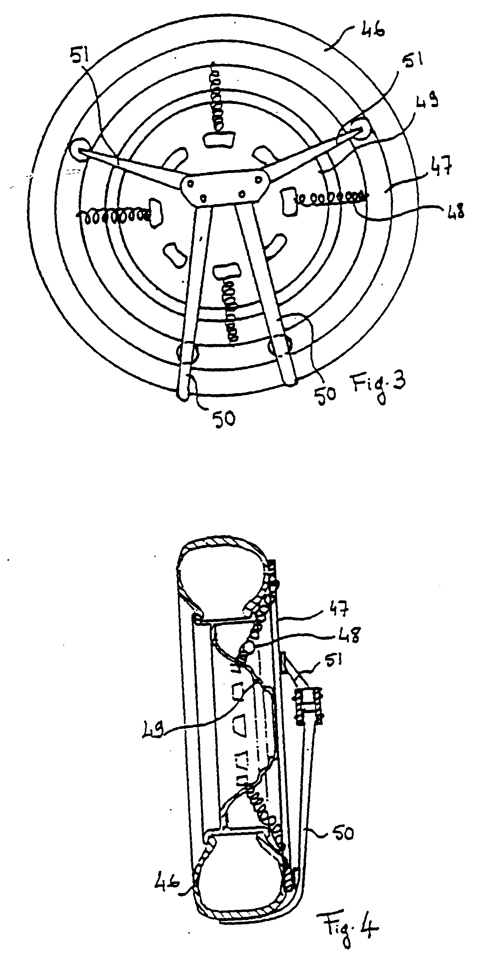

La fig.3 représente une roue munie d'une collerette magnétique permettant de tenir en place en cours de montage le dispositif de tension selon l'invention. Les chaînes ne sont pas représentées.

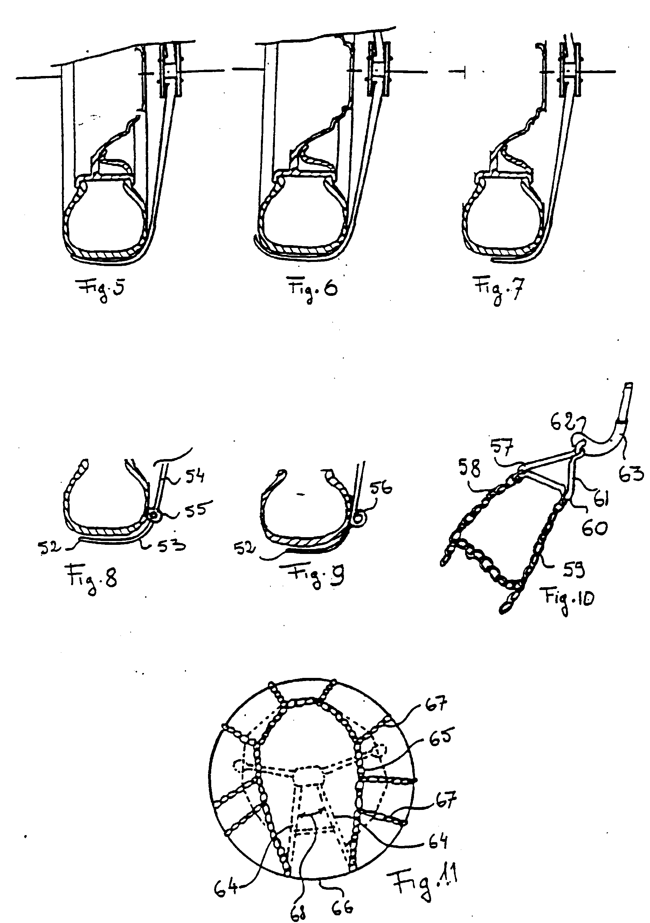

La fig. 4 représente une coupe du dispositif de la fig.3 avec les jambettes alignées. Les chaînes ne sont pas représentées.
Les fig. 5,6,7,8 et 9 représentent diverses formes de jambettes.
La fig.10 représente une variante du mode d'accrochage des chaînes de tour sur les jambettes.
La fig. 11 représente la chaîne de tour intérieure présentant un profil particulier lorsqu'elle est tendue.

L'invention réside dans un dispositif de tension des chaînes de tour (8) fig.1 précédemment décrites lorsqu'elles sont notamment associées à des traverses (1); mais le dispositif convient aussi si les traverses (1) sont remplacées par des systèmes plus complexes connus comme ceux utilisant une disposition croisée des chaînes d'interposition entre le pneu (18) et le sol ou un treillis, sans que ces exemples soient limitatifs. Pour la clarté de l'exposé nous ne prendrons en considération que le cas de l'emploi de traverses (1) étant entendu que tous les systèmes susceptibles d'être fixés par des chaînes de tour (8) relèvent du domaine de cette invention.

Le dispositif de tension des chaînes de tour (8) fig.1 est constitué de deux jambettes (32) en forme de "L". La partie (6) et (7) de chacune des jambettes, correspondant à la partie verticale du "L", a une longueur de l'ordre de grandeur du rayon de la bande de roulement (26) du pneu (18); le sommet du "L" de chaque partie (6) et (7) de jambette (32) est articulé sur une pièce de liaison (11) que nous appellerons ci-après boîtier (11); le boîtier est formé principalement de deux flasques (38) et (39) parallèles entre eux et traversés par les axes d'articulation des jambettes (32); les jambettes (32) sont articulées, sur le boîtier (11), respectivement suivant un axe (10) et un axe (9) parallèles à l'axe (34) fig.2 de la roue (27), lorsque la chaîne à neige Fig.1 est en place sur la roue; ce boîtier (11) permet un débattement des jambettes (32) autour de leurs axes (9) et (10) respectifs depuis une position où elles sont parallèles et côte à côte à une position dans laquelle les jambettes (32) fig.2 sont de préférence dans le prolongement l'une de l'autre. Les parties (6) et (7) de la jambette (32) correspondant à la partie verticale du "L" a évidemment une forme qui permet d'éloigner le boîtier (11) du centre de la jante (33) de la roue (27) d'une distance suffisante pour ne pas être gênée par la forme de cette dernière (33) lorsque le dispositif de tension est en place. La partie (2) et (3) de chaque jambette correspondant à la partie horizontale du "L" est sensiblement parallèle à l'axe (34) de la roue (27), lorsque le dispositif de tension est en place, et vient s'appliquer en travers de la bande de roulement (26) du pneu (18) dont il épouse sensiblement la forme; sa longueur est déterminée en fonction de la largeur du pneu et peut varier comme l'indiquent les fig.5, 6 et 7; dans la version préférée de l'invention, la longueur est telle que l'extrémité des jambettes ne dépasse pas du pneu (18) du côté interne de la roue comme indiqué fig.5 ou fig.7. Lorsque les jambettes (32) tournent autour de leurs articulations (9) et (10), leurs extrémités (2) et (3) correspondant à la partie horizontale du "L" restent parallèles et leur écartement maximum au cours du mouvement doit être supérieur au diamètre extérieur du pneu (18) comme le montre la fig.2.

Les extrémités de la chaîne de tour extérieure (31) sont fixées à demeure en (4) et (5) sur les parties (6) et (7) des jambettes (32). Chacune des extrémités de la chaîne de tour intérieure, située du côté (30) fig.2 de la roue (27), est fixée à demeure au voisinage de l'extrémité (36) de la jambette (32) correspondante, c'est-à-dire au voisinage de l'extrémité (36) de la partie horizontale du "L".

La mise en tension des chaînes de tour (8) fig.1 se fait par rapprochement des jambettes (32), sous l'action de ressorts ou d'élastiques (23) tendus entre les deux jambettes (32) entre des points d'accrochage (24) et (25) situés dans les zones (6) et (7) des jambettes (32), de manière à tendre à refermer l'angle (37) qu'elles font entre elles. Les chaînes de tour (8) étant tendues, les traverses (1) se trouvent tendues comme décrit précédemment.

En cours de fonctionnement les déformations du pneu (18) font sciller les jambettes (32) dans un plan parallèle à l' axe de rotation (34) fig.2 de la roue (27) et il est nécessaire d'en limiter le débattement par rapport à la jante (33); dans une version préférée de l'invention le boîtier (11) Fig.1 comporte deux bras (12) et (13) articulés, à l'une de leurs extrémités, dans le boîtier (11) suivant des axes (16) et (17) sensiblement parallèles à ceux (9) et (10) des jambettes (32) mais placés pour ne pas gêner le débattement de ces dernières autour de leur axe (9) et (10) respectif; les bras (12) et (13) sont fixés, au voisinage de l'autre extrémité (14) et (15), à la chaîne de tour extérieure (13) de manière à ce que, lorsque la chaîne à neige est en place, ils forment entre eux une angle (40) supérieur à 120
degrés, ouvert du côté opposé à l'ouverture de
l'angle (37) des deux jambettes (32) tout en en ayant sensiblement le même plan bissecteur; lorsque la chaîne de tour extérieure (31) est tendue par le rapprochement des jambettes (32), elle constitue un point relativement fixe d'appui du bras ce qui permet de faire une sorte de triangulation permettant de limiter le débattement du boîtier (11).

Au cours du fonctionnement le boîtier (11) Fig.1 permet de désolidariser partiellement les mouvements relatifs des jambettes (32) sous l'action des irrégularités de la route et de la déformation du pneu (18); en effet les jambettes (32) se déplacent dans une direction sensiblement radiale par rapport à la roue (27) tandis que le boîtier (11) oscille autour d'un axe de rotation, restant sensiblement parallèle à lui-même et à l'axe (34) Fig.2 de la roue (27), de manière à compenser les déplacements relatifs des deux jambettes (32) Fig.1; cette oscillation qui provoque le déplacement du point d'articulation des bras (12) et (13) dans une direction perpendiculaire à la direction générale des bras, ce qui permet de limiter considérablement l'effort sur la fixation de l'autre extrémité (14) et (15) sur la chaîne de tour (31); dans une version préférée de l'invention l'extrémité (14) et (15) des bras (12) et (13) fixée à la chaîne de tour (31) comporte une zone plate d'appui sur le pneu (18).

Les axes (16) et (17) des bras (12) et (13) sont placés de préférence de part et d'autre des axes (9) et (10) de rotation des jambettes (32) de manière à ne pas gêner le débattement des jambettes (32) et à faciliter le pliage de la chaîne à neige lorsqu'elle n'est pas en service; lorsque les jambettes (32) sont placées parallèlement côte à cote, les bras (12) et (13) peuvent être alors ramenés parallèlement aux jambettes (32) de manière à ce que l'ensemble prenne le moins de volume possible.

La position des bras (12) et (13) articulés en formant un angle (40) supérieur à 120 degrés ne permet pas d'amortir efficacement les oscillations dûes au déplacement radial des jambettes (32), sous l'action des forces centrifuges et des irrégularités de la route; pour pallier ce phénomène, on peut placer dans le plan bissecteur de l'angle (37) formé par les jambettes (32), une liaison élastique (19) reliant les jambettes (32), auxquelles elle est fixée en des points (21) et (22) des zones (6) et (7), la chaîne de tour (31) à l'endroit (20) où elle coupe le dit plan bissecteur. Si c'est nécessaire, on peut rajouter d'autres bras de maintien du boîtier (11) ou d'autres liaisons souples, élastiques ou non, entre les jambettes (32) et la chaîne de tour extérieure (31) sans sortir du domaine de l'invention.

La mise en place de la chaîne à neige se fait de la façon suivante: on place la chaîne à plat sur le sol de manière à ce que les parties (2) et (3) Fig.1 et Fig.2 des jambettes (32), correspondant à la partie horizontale du "L" soit tournée vers le haut, et que les jambettes (32) soient sensiblement en opposition et placées parallèlement au plan de la roue (27) sur laquelle la chaîne doit être placée; l'ensemble des chaînes de tour (8), des traverses (1), et des bras (12) et (13), sont situés du côté des jambettes (32) opposées à la roue (27). On saisit la chaîne de tour intérieure au droit du point d'attache (20) sur la chaîne de tour extérieure (31), du lien élastique (19) décrit précédemment comme devant être situé dans le plan bissecteur, et on la passe derrière la partie supérieure du pneu (18); pendant ce mouvement là, le boîtier (11) se place au voisinage de l'axe (34) Fig.2 de la roue (27) et les jambettes (32) qui sont dans le prolongement l'une de l'autre viennent coiffer le pneu (18) par leurs extrémités (2) et (3) correspondant à la partie horizontale du "L" tandis que les parties (6) et (7) correspondant à la partie verticale du "L" vient au contact (41) du pneu (18). Les jambettes (32) fig.1 descendent par leur propre poids l'une vers l'autre en pivotant autour de leurs axes (9) et (10) respectifs, tandis que les traverses (1) se placent correctement par rapport à leurs points d'attache (29) sur les chaînes de tour (8) correspondantes; lorsque tout est en place, on solidarise les deux jambettes (32) par un lien élastique (23) tendu qui permet de tendre simultanément les deux chaînes de tour (8) qui elles-mêmes tendent les traverses (1); la chaîne à neige est alors en place. Dans la version préférée de l'invention les bras (12) et (13) se mettent en place d'eux-même lorsque les jambettes (32) pivotent pour se mettre en place tandis que le lien élastique (19) situé dans le plan bissecteur se tend; il faut augmenter la tension du lien élastique (23) entre les jambettes (32), pour tenir compte du fait que les jambettes finiront de se mettre en place dès que le véhicule aura commencé à rouler, afin qu'il demeure alors une tension encore suffisante parce que la distance entre elles est par construction inférieure à la longueur de la zone d'appui du pneu sur la route.

Pour démonter la chaîne à neige, il suffit de placer de préférence la roue (27) dans une position telle que les jambettes (32) ne soient pas coincée entre la bande de roulement (26) et le sol, de défaire le lien élastique (23) qui rapproche les deux jambettes (32) et de les écarter en tirant vers soi de manière à ce que la chaîne de tour intérieure repasse au dessus de la bande de roulement (26) pour venir du côté extérieur, jusqu'à ce que il ne reste que la partie de la chaîne intérieure maintenue prisonnière par le contact de la bande de roulement (26) du pneu avec le sol. Il suffit d'avancer le véhicule pour libérer la chaîne. Il reste à la replier en ramenant les jambettes (32) et dans la version préférée les bras (12) et (13) de manière à ce qu'ils se placent parallèlement les uns aux autres pour occuper le minimum de place.

Dans une variante de l'invention les bras (12) et (13) sont remplacé par la prolongation d'une des jambettes (32) au-delà de son axe de rotation (9) par rapport au boîtier qui reste sensiblement au niveau du centre de la roue, jusqu'à la chaîne (31) à laquelle est fixée son extrémité.

Dans une variante du dispositif, un lien (45) non élastique en coulissant le long des jambettes (42), qu'il enserre, et qui vont en s'écartant, permet d'effectuer la tension des chaînes en jouant sur leur capacité de flexion.

Dans une variante de l'invention, on peut rapporter contre le flanc extérieur du pneu (46), une couronne magnétisée (47) fixée par des ressorts (48) à la jante (49) de la roue, et sur laquelle viennent s'appliquer et se maintenir par attraction magnétique, les jambettes (50) et éventuellement les bras (51) au moment de la pose, pour faciliter la mise en place et d'autre part à supprimer les vibrations en cours de mouvement.

Dans une autre variante de l'invention, l'extrémité (52) fig.8 des jambettes (53), correspondant à la partie horizontale du "L", est reliée à l'autre partie (54) de la jambette (53) par soit une articulation (55) suivant un axe perpendiculaire à la direction générale de la partie (54) de la jambette (53) et à l'axe de l'articulation de cette dernière sur le boîtier, soit par un dispositif déformable élastiquement (56), fig.9 par pivotement autour d'un axe parallèle à la direction de l'axe (55) fig.8 qu'on vient de décrire. Tous ces dispositifs ayant pour but d'absorber les pointes de contraintes subies par l'extrémité (52) des jambettes qui est pincée entre le sol et la bande de roulement du pneu.

Dans une autre variante de l'invention, les extrémités (57) et (60) fig.10 des chaînes de tour (58) et (59) correspondantes sont fixées à un étrier rigide (61) qui lui-même est fixé en un seul point (62), de la jambette (63) correspondante , situé au milieu de la bande de roulement du pneu, lorsque la chaîne à neige est en place.

Dans une autre version de l'invention on cherche à à améliorer la tenue de la chaîne de tour intérieure (65); on rallonge les traverses (67) d'une longueur suffisante pour que la chaîne de tour intérieure (65) prenne une forme, sensiblement elliptique, dont le grand axe est parallèle au plan bissecteur de l'angle (68) formé par les jambettes (64) lorsqu'elles sont en place.

Comme nous l'avons précisé en début de description, tous les autres dispositifs d'interposition entre les bandes de roulement des pneus qui sont compatibles avec l'utilisation de chaînes de tour font partie du domaine de l'invention.

Lorsque les diamètres des roues changent et ou la largeur des pneus dans des marges raisonnables, le rattrapage des dimensions se fait naturellement par une variation de l'angle (37) Fig.1 des jambettes (32) et de l'angle (40) des bras (12) et (13) de maintien. Le même ensemble de tension peut être monté avec des longueurs de chaînes différentes.

Le présent dispositif avec toutes ses variantes convient aussi à des sols autres que la neige, tels que la boue, le sable, ou les sols couverts de végétaux.

## Revendications

1. Dispositif de montage rapide de chaînes à neige sur les roues motrices d'un véhicule, comportant des traverses (1), ou tout autre dispositif équivalent, aptes à être maintenues en place sur la bande de roulement (26) par une chaîne de tour intérieure (65) destinée à être placée du côté de la roue (27) opposé à l'opérateur effectuant le montage et par une chaîne de tour extérieure (31) destinée à être placée du même côté de la roue (27) que l'opérateur, les chaînes de tour (8,65,31) étant aptes à être tendues de part et d'autre de la roue (27) à l'aide de deux jambettes (32) en forme de "L" auxquelles elles sont fixées, directement ou indirectement au niveau de l'une des parties (2,3), dite horizontale, de chaque jambette (32), lesdites jambettes (32) étant articulées par leur extrémité située au niveau de leur autre partie (6,7), dite verticale, et chacune suivant un axe de rotation (9,10), à une pièce de liaison (11) commune, ladite pièce de liaison (11) étant destinée à se trouver, en position montée, au voisinage de l'axe (34) de la roue (27), du côté de la roue (27) où se trouve la chaîne de tour extérieure (31), le maintien en tension de l'ensemble en position montée étant assuré par un premier lien (23) dont les extrémités sont aptes à être fixées à des points d'accrochages (24,25) situés chacun sur la partie verticale (6,7) d'une jambette (32), le dispositif comportant en outre au moins un bras (12,13) ayant une (14,15) de ses extrémités fixée seulement à la chaîne de tour extérieure (31) et l'autre de ses extrémités reliée à la pièce de liaison (11), caractérisé en ce que lesdits bras (12,13) sont au nombre de deux au moins et sont articulés sur la pièce de liaison (11) au niveau de leur autre extrémité, autour d'axes de rotation (16,17) respectifs, les axes d'articulation (16,17) des bras (12,13) étant sensiblement parallèles à ceux (9,10) des jambettes (32), en ce que ledit premier lien (23) est élastique, et en ce que les jambettes (32) sont reliées entre elles et à la chaîne de tour extérieure (31) par au moins un deuxième lien élastique (19) à trois points de fixation (20,21,22), dont le point de fixation (20) à la chaîne de tour extérieure (31) est destiné, en position montée, à se trouver dans le plan bissecteur de l'angle (37) formé par les jambettes (32) et dont les deux autres Points de fixation sont destinés à être reliés chacun à la partie verticale (6,7) d'une jambette (32).

2. Dispositif suivant la revendication 1, caractérisé en ce que les extrémités de la chaîne de tour intérieure (8) sont accrochées à une extrémité (36) des parties horizontales (2,3) de chacune des jambettes (32).

3. Dispositif suivant la revendication 1, caractérisé en ce que les extrémités (57,60) des chaînes de tour intérieure (58) et extérieure (59) sont rattachées en un seul point de la jambette (63) correspondante au moyen d'un étrier (61).

4. Dispositif suivant la revendication 1, caractérisé en ce qu'une couronne magnétisée (47) est associée au flanc extérieur du pneu (46) et fixée à la jante (49) par des liens élastiques (48) et sur laquelle viennent se plaquer par attraction magnétique les jambettes (32,50) et éventuellement les bras (12,51).

5. Dispositif suivant la revendication 1, caractérisé en ce que les parties horizontales (2,3) des jambettes (32) d'une part et respectivement leurs parties verticales (6,7) d'autre part, sont articulées entre elles par une liaison élastique (56) permettant aux deux parties respectives de chaque jambette (32) d'osciller l'une par rapport à l'autre tout en restant dans le plan constitué par la forme en "L" de la jambette (32).

6. Dispositif suivant l'une quelconque des revendications précédentes, caractérisé en ce que la longueur des traverses (1,67) est telle qu'elle permet aux chaînes de tour (31,65) de prendre lorsqu'elles sont tendues, un profil sensiblement elliptique dont le grand axe se situe dans le plan bissecteur de l'angle formé par les jambettes (32,64).

## Claims

1. Device for quickly mounting snow chains on the main wheels of a vehicle and comprising crossbars (1) or any other equivalent device and able to be kept in place on the tire tread (26) by an internal wall chain (65) intended to be placed on the side of the wheel (27) opposite the operator carrying out the mounting, and by an external wall chain (31) intended to be placed on the same side of the wheel (27) as the operator, the wall chains (8,65,31) being able to be taut on both sides of the wheel (27) with the aid of two L-shaped struts (32) to which they are fixed directly or indirectly at the level of one of the horizontal portions (2, 3) of each strut (32), said struts (32) being joined via their end situated at the level of the other vertical portion (6, 7) and each along a spin axis (9,10) to a common linking element (11), said linking element (11) being intended to be located in a mounted position close to the axis (34) of the wheel (27) on the side of the wheel (27) where the external wall chain (31) is located, the keeping taut of the assembly in its mounted position being ensured by a first link (23) whose ends are able to be fixed to hooking points (24, 25) each situated on the vertical portion (6,7) of a strut (32), the device further comprising at least one arm (12,13) having one (14,15) of its ends fixed solely to the external wall chain (31) and the other to the linking element (11), characterised in that the number of said arms (12,13) is at least two linked to the linking element (11) at the level of their other end around respective spin axes (16,17), the hinge pins (16,17) of the arms (12,13) being approximately parallel to those (9,10) of the struts (32), in that said first link (23) is elastic, and in that the struts (32) are interconnected and to the external wall chain (31) by at least one second elastic link (19) with three fixing points (20,21,22) whose fixing point (20) on the external wall chain (31) being intended in the mounted position to be located inside the bisectional plane of the angle (37) formed by the struts (32) and whose other two fixing point are intended to be each connected to the vertical portion (6,7) of a strut (32).

2. Device according to claim 1, characterised in that the ends of the internal wall chain (8) are hooked to one end (36) of the horizontal portions (2,3) of each of the struts (32).

3. Device according to claim 1, characterised in that the ends (57,60) of the internal (58) and external (59) wall chains are fastened into a single point of the strut (63) corresponding to the element of a clamp (61).

4. Device according to claim 1, characterised in that a magnetised ring (47) is associated with the outer flank of the tire (46) and fixed to the strut (49) by elastic links (48) and on which the struts (32, 50) and possibly the arms (12, 51) are plated.

5. Device according to claim 1, characterised in that firstly the horizontal portions (2,3) of the struts (32) and secondly respectively their vertical portions (6,7) are interlinked by an elastic link (56) enabling the respective two portions of each strut (32) to have one oscillate with respect to the other whilst remaining inside the plane constituted by the L shape of the strut (32).

6. Device according to one of the preceding claims, characterised in that the length of the crossbars (1, 67) is such that it enables the wall chains (31, 65) when taut to take up an approximately elliptic profile whose major axis is situated inside the bisectional plane of the angle formed by the struts (32, 64).

## Patentansprüche

1. Einrichtung zur schnellen Montage von Schneeketten auf die Antriebsräder eines Fahrzeuges, mit Querträgern (1) oder ähnlicher beliebiger Einrichtung, die derart ausgebildet sind, um an der Reifenlauffläche (26) durch eine innere Umlaufskette (65), die auf der dem die Befestigung durchführende Operator gegenüberstehender Seite des Rades (27) angebracht werden kann, und durch eine äußere Umlaufskette (31) festgehalten wird, die auf der gleichen Seite des Rades (27) wie der des Operators angebracht werden kann, wobei die Umlaufsketten (8, 65, 31) beiderseits des Rades (27) mittels zwei "L"-förmiger Schenkel (32) spannbar sind, an welchen sie mittelbar oder unmittelbar an dem einen sogenannten Teil (2,3) der jeweiligen horizontalen Schenkel (32) fixiert sind, wobei die besagten Schenkel (32) an ihrem auf der Höhe ihres anderen sogenannten vertikalen Teiles (6, 7) liegenden Ende angelenkt sind und zwar je nach einer Drehachse (9, 10) an einem gemeinsamen Verbindungsstuck (11), wobei das besagte Verbindungsstück (11) sich im montierten Zustand, in der Nähe der Achse (34) des Rades (27), auf der Seite des Rades (27) befindet, wo die äußere Umlaufskette (31) des Rades liegt, wobei die Spannungssicherung der Gesamteinrichtung im montierten Zustand durch ein erstes Verbindungsglied (23) gewährleistet wird, dessen Enden an Einhängestellen (24, 25) befestigbar sind, die sich je an dem vertikalen Teil (6, 7) eines Schenkels (32) befinden, wobei die Einrichtung zusätzlich mindestens einen Arm (12, 13) umfaßt, dessen eines Ende (14, 15) nur an der äußeren Umlaufskette (31) befestigt und dessen anderes Ende mit dem Verbindungsstück (11) verbunden ist, dadurch gekennzeichnet, daß mindestens zwei besagte Arme (12, 13) an dem Verbindungsstück (11) mit ihren anderen Ende um jeweilige Drehachsen (16, 17) angelenkt sind, wobei die Gelenkachsen (16, 17) der Arme (12, 13) wesentlich parallel zu den (9, 10) der Schenkel (32) sind, daß das besagte erste Verbindungsglied (23) federnd ist und daß die Schenkel (32) miteinander und mit der äußeren Umlaufskette (31) durch wenigstens ein zweites elastisches Verbindungsglied (19) an drei Befestigungsstellen (20, 21, 22) verbunden sind, wobei die Befestigungsstelle (20) sich an der äußeren Umlaufskette (31) im montierten Zustand in der durch die Schenkel (32) gebildeten doppelkreisbogenförmigen Ebene des Winkels (37) befindet, und wobei die weiteren zwei Befestigungsstellen je mit dem vertikalen Teil (6, 7) eines Schenkels (32) verbindbar sind.

2. Einrichtung nach Anspruch 1, dadurch gekennzeichnet, daß die Enden der inneren Umlaufskette (8) an einem Ende (36) der horizontalen Teile (2, 3) der jeweiligen Schenkel (32) festhängen.

3. Einrichtung nach Anspruch 1, dadurch gekennzeichnet, daß die Enden (57, 60) der inneren (58) und äußeren (59) Umlaufsketten an einer einzigen Stelle des entsprechenden Schenkels (63) mittels eines Bügels (61) festgehalten werden.

4. Einrichtung nach Anspruch 1, dadurch gekennzeichnet, daß eine magnetische Kranz (47) der Außenflanke des Reifens (46) zugeordnet und durch federnde Verbindungsglieder (48) an der Felge (49) festgehalten wird, und an welche die Schenkel (32, 50) und gegebenenfalls die Arme (12, 51) durch magnetische Kraft zur Anlage kommen.

5. Einrichtung nach Anspruch 1, dadurch gekennzeichnet, daß die horizontalen Teile (2, 3) der Schenkel (32) einerseits und ihre jeweiligen vertikalen Teile (6, 7) andererseits durch eine elastische Verbindung (56) miteinander angelenkt sind, wodurch beide jeweiligen Teile jedes Schenkels (32) relativ zu einander schwingen können, ohne die durch die L-Form des Schenkels (32) gebildete Ebene zu verlassen.

6. Einrichtung nach einem der vorhergehenden Ansprüche, dadurch gekennzeichnet, daß die Länge der Querträger (1, 67) derart ausgebildet ist, daß die Umlaufsketten (31, 65) im gespannten Zustand ein wesentlich elliptisches Profil einnehmen können, dessen große Achse in der doppelkreisbogenförmigen Ebene des durch die Schenkel (32, 64) gebildeten Winkels liegt.
